# EUROPEAN PATENT SPECIFICATION

(11) **EP 3 545 774 B1**
(45) Date of publication and mention of the grant of the patent: **07.09.2022**
(21) Application number: 17873033.9
(22) Date of filing: 01.11.2017
(51) Int. Cl.: A23L 25/00, A23L 27/10

(54) **POWDERED PROCESSED SESAME PRODUCT AND METHOD FOR PRODUCING SAME**
PULVERISIERTES VERARBEITETES SESAMPRODUKT UND VERFAHREN ZUR HERSTELLUNG DAVON
PRODUIT DE SÉSAME TRAITÉ EN POUDRE ET SON PROCÉDÉ DE PRODUCTION

(30) Priority: 23.11.2016 JP 2016227351
(43) Date of publication of application: 02.10.2019
(73) Proprietor: Kuki Sangyo Corporation, Yokkaichi-shi, Mie 510-0059 (JP)
(72) Inventor: HARADA, Sendai, Yokkaichi-shi Mie 510-0059 (JP)
(74) Representative: Marks & Clerk LLP
(86) International application number: PCT/JP2017/039559
(87) International publication number: WO 2018/096891

(56) References cited:
- JP-A- H0 838 115
- JP-A- S5 820 178
- JP-A- H04 363 393
- JP-A- 2004 159 606
- JP-A- 2008 022 845
- JP-A- 2013 192 545
- JP-A- 2014 233 251

## Description

### TECHNICAL FIELD

The present invention relates to a powdered processed sesame product with a low fat and oil content and to a method for producing the same.

### BACKGROUND ART

Sesame is known as a food containing components such as sesamin, in addition to dietary fibers, calcium, iron, zinc, and other components, having a high nutritive value, and also having excellent functionalities such as antioxidative property. Sesame is widely used in the forms of sesame oil, roasted sesame, ground sesame, paste sesame, or the like for both household and professional uses. Paste sesame is in paste form (sesame paste) produced by pounding and kneading in an attrition mill after sesame seeds are carefully selected, washed with water, husked if necessary, and subjected to a roasting process. As its applications, the paste sesame has been used by mixing it in other foods such as sesame tofu, dressings, or sauces.

Conventionally, a method for producing paste sesame has been developed as in Patent Literature 1. In this production method, paste sesame is produced by mixing sesame paste obtained by triturating seeds of sesame with an emulsified water solution, and sugar or a preservative as necessary. This emulsified water solution is obtained by uniformly mixing an emulsifier such as a sucrose fatty acid ester, a sorbitan fatty acid ester, or a glycerol fatty acid ester, a liquid fat and oil, and water using a homogenizer. It is said that in this production method, paste sesame that easily mixes with a water-soluble component and tastes pleasant in the mouth can be obtained, and particularly, its retention of a dispersed state after being left is excellent.

In addition, a method for producing sesame paste containing an aqueous solvent and having an excellent flavor without losing its feeling of richness has been developed as in Patent Literature 2. In this production method, a mixture in which an aqueous solvent from 70% by weight to 95% by weight is added to a sesame material from 5% by weight to 30% by weight is finely ground and processed using a predetermined wet fine grinder.

Patent Literature 3 discloses a method for preparing sesame powder by freezing roasted sesame in liquid nitrogen and then pulverizing the frozen sesame.

Patent Literature 4 describes a method for forming sesame powder by steaming roasted sesame, pressing the swollen sesame to give a residual oil content of 20-30 wt.% and then freezing and pulverizing the sesame in liquid nitrogen.

### PRIOR ART DOCUMENTS

### PATENT DOCUMENTS

Patent Literature 1: JP 2000-14337 A
Patent Literature 2: JP 2014-233251 A
Patent Literature 3: JP 2013-192545 A
Patent Literature 4: JP 08038115 A

### SUMMARY OF THE INVENTION

### PROBLEMS TO BE SOLVED BY THE INVENTION

Sesame contains as much as 50% by mass or larger fat and oil content. In the case where sesame with such a high oil content left as it is like conventional paste sesame (sesame paste) is to be used as a raw material, the following disadvantages may occur. Specifically, (1) the paste sesame cannot be used for low calorie-oriented products because of its high calorie content, (2) the additive amount of the paste sesame to non-oil dressings or other processed products emphasizing on being oil free is limited, and (3) it is difficult to apply the paste sesame to foods (confectioneries, bread, and fermented foods such as miso (fermented soybean paste)) the processing of which can be obstructed due to separation of the fat and oil content and difficulty in use.

Steps for production adopted by food processing manufacturers often involve subdivision and measurement of raw materials. Typical paste sesame (sesame paste) has high adhesion, which makes the processing difficult. In addition, the fat and oil content becomes separated when the paste sesame is left for a long time, which requires the mixing and uniformizing of hardened solid content. Furthermore, paste sesame contains a high oil content and oil repels water, and when mixed in other foods, it is likely to form undissolved lumps, which make uniformizing not easy. In this way, paste sesame is difficult to handle and involves a problem in separation of oil and water to varying degrees.

The present invention has been made in view of the aforementioned circumstances and has an object to provide a powdered processed sesame product with a reduced fat and oil content and excellent handleability, while the flavor of paste sesame is retained and to provide a method for producing the same.

### MEANS FOR SOLVING THE PROBLEM

A processed sesame product according to the present invention is a processed sesame product which is powder, containing a ground product of sesame, and the ground product of sesame has an oil content of smaller than 30% by mass relative to the total mass of the ground product and the 10% cumulative diameter is 30 µm or smaller. In particular, the 10% cumulative diameter of the ground product of sesame is 20 µm or smaller.

The 50% cumulative diameter of the ground product of sesame is 70 µm or larger.

The ground product of sesame has at least one peak in a range of 20 µm or smaller in particle diameter in a grain size distribution diagram in which a vertical axis indicates existence ratio and a horizontal axis indicates particle diameter.

A method for producing a processed sesame product according to the present invention is a method for producing the processed sesame product described above according to the present invention, including an oil-squeezing step of heating and oil-squeezing sesame as a raw material to make an oil content in the raw material smaller than 30% by mass; and a grinding step of grinding the oil-squeezed raw material to be a ground product that has a 10% cumulative diameter of 30 µm or smaller.

After the oil-squeezing step and before the grinding step, the method includes a step of coarsely grinding the oil-squeezed raw material.

The oil-squeezing step is a step of heating and oil-squeezing the sesame as a raw material at a temperature between 120°C to 180°C.

The grinding step is a step of grinding the oil-squeezed raw material to provide a ground product that has a 10% cumulative diameter of 30 µm or smaller and a 50% cumulative diameter of 70 µm or larger.

### EFFECTS OF THE INVENTION

A processed sesame product according to the present invention is a processed sesame product which is powder, containing a ground product of sesame and the ground product of sesame has an oil content of smaller than 30% by mass relative to the total mass of the ground product and the 10% cumulative diameter is 30 µm or smaller, and the fat and oil content is reduced and handleability is also excellent, while the flavor of paste sesame is retained. A calorie reduction can be achieved and an application to many kinds of foods can be achieved by reducing the fat and oil content. Handleability is excellent and the separation or ooze of oil also does not occur with the lapse of time because of a predetermined powdered form.

The ground product of sesame has an oil content of smaller than 30% by mass relative to the total mass of the ground product and the 10% cumulative diameter is 30 µm or smaller, and, in addition, the 50% cumulative diameter is 70 µm or larger, and the processed sesame product has a good balance of the paste sesame feel (clinging to the tongue with a rich taste or not), the strength of flavor (strength of scent smelling from the back of the nose when putting into the mouth), and the strength of taste (strength of taste feeling with the tongue), similar to the conventional paste sesame, which is paste-like.

A method for producing a processed sesame product according to the present invention includes an oil-squeezing step of heating and oil-squeezing sesame as a raw material to make an oil content in the raw material smaller than 30% by mass and a grinding step of grinding the oil-squeezed raw material to provide a ground product that has a 10% cumulative diameter of 30 µm or smaller. This method can produce a processed sesame product with a reduced fat and oil content and excellent handleability, while the flavor of paste sesame is retained.

As the method includes a step of coarsely grinding the oil-squeezed raw material after the oil-squeezing step and before the grinding step, it becomes easier to finely grind the raw material in the grinding step.

As the oil-squeezing step includes a step of heating and oil-squeezing sesame as a raw material at a temperature between 120°C to 180°C, a processed sesame product with a rich flavor can be produced while preventing it from burning.

### BRIEF DESCRIPTION OF THE DRAWINGS

Fig. 1 illustrates a schematic view of a production step of a processed sesame product according to the present invention.
Fig. 2 illustrates a photograph of a processed sesame product of Example 1.
Fig. 3 illustrates a grain size distribution diagram of a processed sesame product of Example 1.
Fig. 4 illustrates a photograph of paste sesame of Reference Example 1.
Fig. 5 illustrates a grain size distribution diagram of paste sesame of Reference Example 1.
Fig. 6 illustrates grain size distribution diagrams of a processed sesame product of Example 2 and Example 4.
Fig. 7 illustrates grain size distribution diagrams of a processed sesame product of Comparative Example 2 and Comparative Example 4.
Fig. 8 illustrates grain size distribution diagrams of processed sesame products of Example 5 and Example 6.
Fig. 9 illustrates a grain size distribution diagram of a processed sesame product of Example 7.
Fig. 10 illustrates a grain size distribution diagram of a processed sesame product of Example 8.
Fig. 11 illustrates a grain size distribution diagram of a processed sesame product of Example 9.

### MODE FOR CARRYING OUT THE INVENTION

A processed sesame product according to the present invention is composed of a ground product of sesame having a small amount of oil content and a predetermined grain size distribution. Before a grinding step, the oil content is reduced by oil-squeezing not to be in paste form like paste sesame, but in solid powdered form. Specifically, the oil content is smaller than 30% by mass relative to the total mass of ground product, and the 10% cumulative diameter is 30 µm or smaller.

The ground product of sesame composed of the processed sesame product according to the present invention is an aggregation (powder and granular material) of fine powder or particles obtained by finely grinding sesame as a raw material. The "X% cumulative diameter" used in the present invention is a particle diameter in a case where a frequency (%) of particle diameter is accumulated from a small value of a particle diameter and an accumulation value is X% when measuring a particle diameter distribution (a grain size distribution) of the ground product using the known grain size distribution measuring apparatus (for example, a laser diffraction grain size distribution measuring apparatus).

In the present invention, in the ground product of sesame, the accumulation value of a frequency of particles having 30 µm or smaller in a particle diameter is 10% or larger, that is, the 10% cumulative diameter is specified to be 30 µm or smaller. In a case where the 10% cumulative diameter is 30 µm or smaller, the particle size is a size with which the tongue can feel the particles, and in a case of dissolving in soup or the like, the soup clings to the tongue with rich taste and the paste sesame feel can be obtained. In the ground product of sesame, the 10% cumulative diameter is preferably 25 µm or smaller and more preferably 20 µm or smaller. In this case, many finer particles are contained and the paste sesame feel becomes easy to be obtained.

In a grain size distribution diagram in which a vertical axis indicates existence ratio and a horizontal axis indicates particle diameter by the measuring method described above, the ground product of sesame preferably has at least one peak in a range of 20 µm or smaller in a particle diameter. As there is also a peak (around 10 µm) at a small side of a particle diameter, relatively many fine particles in this range are contained, and the paste sesame feel becomes easy to be obtained as mentioned above.

In the ground product of sesame, the 50% cumulative diameter is preferably 70 µm or larger. The 50% cumulative diameter is more preferably 120 µm or larger and the 50% cumulative diameter is even more preferably 200 µm or larger. The fine particles as described above are contained, whereas a coarse ground product such as an epidermis is contained as particles that are large to some extent. Therefore, the strength of flavor or the strength of taste of sesame can be improved and a property closer to paste sesame can be obtained, than in a case of not containing such particles. Moreover, the upper limit of the 50% cumulative diameter is not limited but when the 50% cumulative diameter becomes too large, the 10% cumulative diameter also becomes large and therefore the above range (the 10% cumulative diameter is 30 µm or smaller) is not satisfied, and thus the 50% cumulative diameter is preferably about 350 µm at most.

In a grain size distribution diagram in which a vertical axis indicates existence ratio and a horizontal axis indicates particle diameter by the measuring method described above, the ground product of sesame has preferably at least one peak in a range of 70 µm or larger in a particle diameter and preferably in a range of 120 µm or larger in a particle diameter. As there is a peak (for example, around 300 µm) at a large side of a particle diameter, many relatively large particles in this range are contained, and the strength of flavor or the strength of taste of sesame can be improved as mentioned above.

The oil content is made smaller than 30% by mass relative to the total mass of ground product of sesame. Moreover, the "oil content" is the amount of fat and oil content contained in a ground product of sesame and can be easily measured by extracting an oil using diethyl ether or the like. When the oil content is 30% by mass or larger, the ground product is not in powdered form but in paste form when ground (triturated). Even in a case where the ground product is largely in powdered form, the adhesion is high and there are some cases where processability is poor and the fat and oil content exudes to the surface with the lapse of time. The lower limit of the oil content is not limited but as long as a usual oil-squeezer is used and heating is carried out in a range not spoiling the flavor due to carbonization or the like, the oil content can be up to about 3% by mass.

The oil content is preferably 25% by mass or smaller and more preferably 20% by mass or smaller. Reducing the oil content to 20% by mass or smaller leads to a calorie reduction, and the content ratio of other components relatively contributing to health increases. The adhesion is also particularly low, and the ground product is easily dispersed in an aqueous system and easily mixed and used with other cooking ingredients.

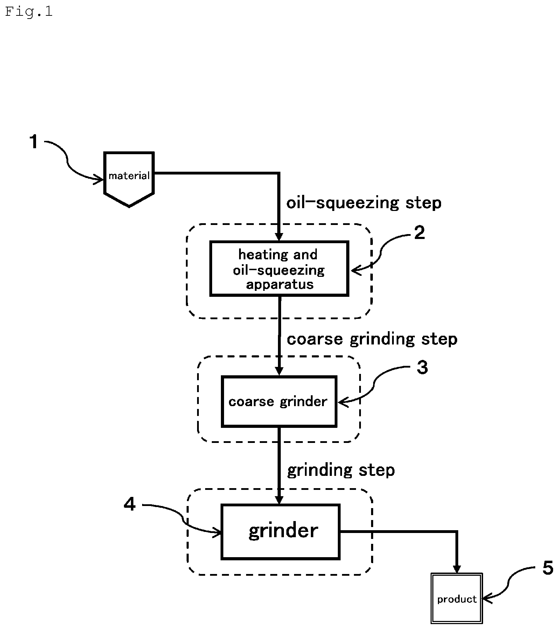

A method for producing a processed sesame product according to the present invention is described based on Fig. 1. Fig. 1 is a schematic view of a production step of a processed sesame product according to the present invention. As illustrated in Fig. 1, these production steps include an oil-squeezing step using a heating and oil-squeezing apparatus 2, a coarse grinding step using a coarse grinder 3, and a grinding step using a grinder 4. Here, the coarse grinding step is not an essential step and is applied as necessary. Sesame as a raw material 1 is not limited and any sesame seeds such as white sesame, black sesame, golden sesame, or brown sesame can be used. Sesame may be used as a raw material as it is or roasted sesame may be used. Roasting by hot air, microwave, a gas burner, or the like can be employed. The husk of sesame seeds is preferably left without taking it off. Hereinafter, each step will be described.

### [Oil-squeezing step]

This step is a step of heating and oil-squeezing sesame as a raw material using a heating and oil-squeezing apparatus 2 to make an oil content in the raw material smaller than 30% by mass. Normally, in a case of oil-squeezing a sesame oil or the like, the temperature is set to 200°C or higher but in this step, oil-squeezing is carried out at lower temperature intentionally. Specifically, the temperature is preferably between 120°C to 180°C. Thus, a processed sesame product with a rich flavor can be produced while preventing it from burning. A heater is not limited and heating by gas or electricity can be employed. For example, a flat kettle or a rotary kiln can be used. As an oil-squeezing apparatus, the known press type oil-squeezing apparatus or the like used for oil-squeezing a sesame oil or the like can be used. An apparatus combining a heating apparatus and an oil-squeezing apparatus may be used.

### [Coarse grinding step]

This step is a step of coarsely grinding a lump of the raw material (a pressed product) after pressing as if loosening using a coarse grinder 3 such a crusher. A lump may be loosened manually using a mesh or the like without using a crusher. In the grinding step, it becomes easier to finely grind the raw material by loosening the lump and it becomes easier to achieve the 10% cumulative diameter of 30 µm or smaller of the ground product.

### [Grinding step]

This step is a step of grinding the oil-squeezed raw material using a grinder 4 so that the raw material becomes a ground product having a 10% cumulative diameter of 30 µm or smaller using the grinder 4. As the grinder 4, a stone mill type continuous attrition mill pounding sesame between the upper and lower disks, a high-speed rotation grinder, or the like can be used. A clearance that serves as the pounding part in a continuous attrition mill between the upper and lower disks is not limited but is set to about 0 µm to 200 µm.

A raw material 1 becomes a product 5 after each step described above. The product 5 is a processed sesame product according to the present invention and composed of a ground product of sesame that is in solid powdered form, has a small amount of oil content, and has a predetermined grain size distribution.

The processed sesame product according to the present invention may be not only a product made of the sesame ground product alone but also a processed product produced by mixing other compounding agents in the sesame ground product in a range of not preventing desired effects (giving a flavor of paste sesame and having an excellent handling). Examples of the other compounding agent include preservatives, perfumes, colorants, antioxidants, nutritious supplements, or the like. Moreover, components incapable of retaining powdered form, such as an aqueous solvent or a liquid fat and oil (a fat and oil compounded externally, other than the fat and oil content originally included), are not mixed.

The processed sesame product according to the present invention can be used by mixing, kneading, or the like with various kinds of foods. For example, the processed sesame product may be used by mixing, kneading, or the like with various kinds of foods such as dressings, cereal foods, powdered soups, breads, cakes, noodles, confectioneries, jellies, frozen foods, ice creams, dairy products, or beverages.

In the processed sesame product according to the present invention, approximately 80% of the original oil content is reduced. Thus, the calorie is also reduced significantly and applicability to low-calorie products is significantly expanded. Because of the reduction in an oil content, components such as dietary fibers, calcium, iron, or zinc, which attract attention as healthy foods, relatively increase by a factor of approximately two. These nutrient components have a considerably high component value compared to other grains and these active components can be given with not additives or chemical synthetic compounds but natural materials. An application to food for the ameliorating osteoporosis, an application to food for an obesity countermeasure, or an application to care food (smile care food) or the like enabling the intake of specific nutrient components because it contains highprotein is expected.

As the processed sesame product according to the present invention has low adhesion and is in powdered form, not only subdivision and measurement are easy but also the separation or oozing of oil content does not occur over time, and therefore handling is very easy. The processed sesame product is instantly dispersed in an aqueous system and a flavor similar to the paste sesame can be given. Thus, the processed sesame product can be applied to powdered soups, instant noodles, powdered seasonings, beverages, chocolates, or the like. When dispersed in soup or the like, the deliciousness of the after taste increases and there is a rich taste imparting effect. Particularly, in a "salt reduction product" in which market expansion is expected, there are many products enhancing deliciousness and rich taste instead of using salt and this processed sesame product can be applied to the market targeting salt reduction.

In the processed sesame product according to the present invention, the disadvantages of sesame can be solved in the past by reducing the fat and oil content. Thus, the possibility of sesame such as a use to the processed products in which it was difficult for food processing manufacturers, is markedly expanded and an expansion of the market of sesame can be achieved. The processed sesame product is widely used not only as a raw material for processing but also for the household use and it is possible to respond to the rising health needs in an aging society in which people aged 65 or older will account for 25% or higher of total population.

### Example

### [Example 1]

An example of a processed sesame product according to the present invention was manufactured using steps illustrated in Fig. 1 as mentioned above, properties and a grain size distribution of the obtained processed sesame product were measured and a comparison of nutrient components or the like in the processed sesame product and other grains was carried out. A specific production procedure of the processed sesame product is as follows. Seeds of white sesame were used as a raw material and these seeds were roasted to be roasted sesame. After this roasted sesame was heated to between 120°C to 180°C at a product temperature using a rotary kiln, the roasted sesame was put in an oil- squeezing apparatus to press and the fat and oil content in the raw material was reduced. The raw material after being pressed was coarsely ground as if loosening and this was transferred to put in a grinder and ground to fine particles (powdered form) using the grinder. As a grinder, a high-speed rotation grinder was used.

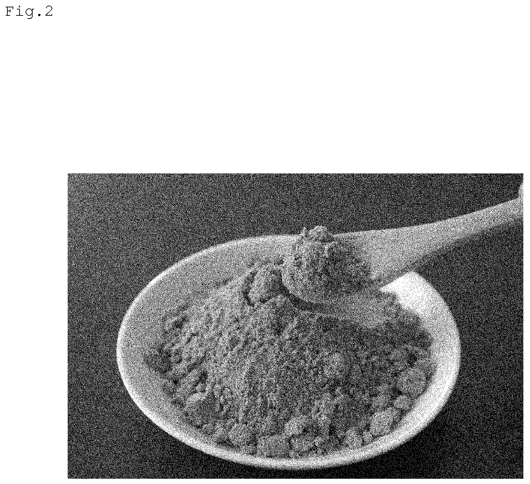

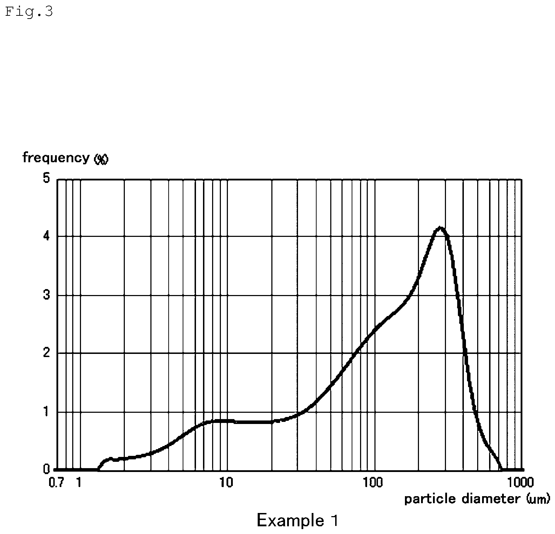

A photograph of the obtained powdered processed sesame product is illustrated in Fig. 2. The grain size distribution of this processed sesame product was measured using a laser diffraction grain size distribution measuring apparatus. The result was illustrated in Fig. 3. In the grain size distribution diagram in Fig. 3, a vertical axis indicates existence ratio (frequency (%)) and a horizontal axis indicates particle diameter (µm). The same applies to the axes of the grain size distribution diagrams in Examples and Comparative Examples described later. The 10% cumulative diameter was 9.516 µm and the 50% cumulative diameter was 125.9 µm according to this grain size distribution diagram.

### [Reference Example 1]

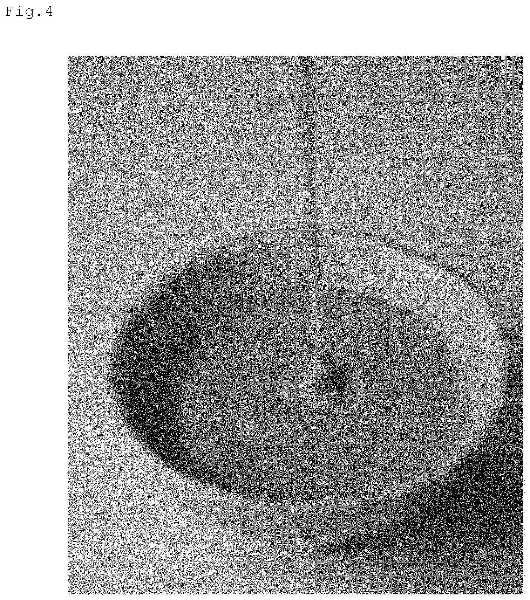

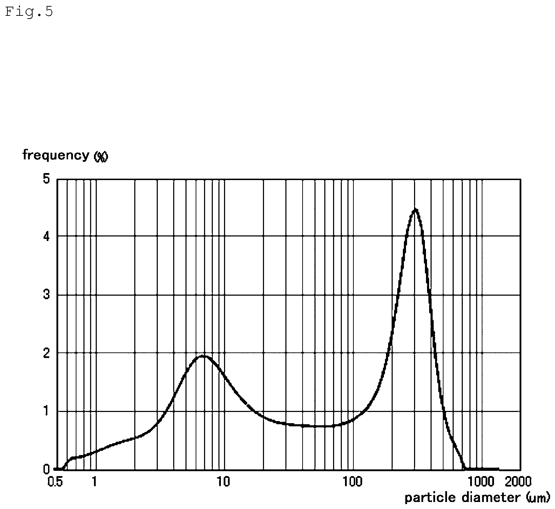

The same seeds of white sesame as the ones used in Example 1 were used as a raw material, and after each step such as washing with water, husking, and roasting, paste sesame in paste form was produced by pounding the seeds of white sesame in an attrition mill. A photograph of the obtained paste sesame is illustrated in Fig. 4. The grain size distribution of this paste sesame was measured in the same manner as in Example 1. A measuring result is illustrated in Fig. 5.

Each of the processed sesame products in Example 1 and the paste sesame in Reference Example 1 were dissolved in soups in an equal amount to carry out a sensory evaluation via the human tongue. The sensory evaluation evaluated three points: (1) paste sesame feel: clinging to the tongue with rich taste or not, (2) strength of flavor: strength of scent smelling from the back of the nose when putting into the mouth, and (3) strength of taste: strength of taste feeling with the tongue. As a result of the sensory evaluation, as to the powdered processed sesame product in Example 1, the same paste sesame feel as that of conventional paste sesame in Reference Example 1 was obtained, and it was possible to sufficiently feel the strength of flavor and strength of taste. In Example 1, it was thought that the 10% cumulative diameter was 30 µm or smaller (9.516 µm) and there was also a peak (around 10 µm) on the small side of a particle diameter, and many fine particles in a particle diameter were contained, thus the paste sesame feel was obtained.

A rich taste increasing effect when mixing "dried bonito" and the processed sesame product of Example 1 together to add to the soup, was examined, compared to a case of adding only "dried bonito" using a taste sensor (Intelligent Sensor Technology, Inc., TS-5000Z). This sensor can individually digitalize the bitterness of the first taste, the astringency of the first taste, the deliciousness of the first taste, the deliciousness and rich taste of the after taste, the astringency of the after taste, the bitterness of the after taste, and the salty taste to evaluate. As a result, it was confirmed that the deliciousness and rich taste of the after taste increased and other elements stayed almost the same.

Furthermore, as to this processed sesame product, an analysis of nutrient components was carried out. The results are listed in Table 1. Moreover, the data in Table 1 represents a contained amount of each component in 100 g of samples. In Table 1, a part of the data of roasted sesame and the data of other grains is referred to in STANDARD TABLES OF FOOD COMPOSITION IN JAPAN Fifth Revised and Enlarged Edition (Ministry of Education, Culture, Sports, Science and Technology: the Council for Science and Technology, the Subdivision on Resources 2010).

**Table 1**

| Items | (g) | (g) | Kcal | (g) | (g) | (mg) | (mg) | (mg) | (mg) |
|---|---|---|---|---|---|---|---|---|---|
| | Protein | Oil content | Calorie | Dietary fibers | Carbohydrate | Calcium | Mg | Iron | Zinc |
| Example 1 (Powdered processed sesame product) | 38.9 | 20.3 | 426.0 | 20.4 | 11.6 | 1,800.0 | 694.0 | 13.1 | 13.0 |
| Roasted white sesame | 20.1 | 57.9 | 640.0 | 12.6 | 5.9 | 796.0 | 370.0 | 6.1 | 5.5 |
| Oatmeal | 13.7 | 5.7 | 380.0 | 9.4 | 59.7 | 47.0 | 100.0 | 3.9 | 2.1 |
| Brown rice | 6.8 | 2.7 | 350.0 | 3.0 | 34.2 | 9.0 | 110.0 | 2.1 | 1.8 |
| Corn grits | 8.2 | 1.0 | 355.0 | 2.4 | 74.0 | 2.0 | 21.0 | 0.3 | 0.4 |
| Soybean (domestic, dried) | 35.3 | 19.0 | 417.0 | 17.1 | 11.1 | 240.0 | 220.0 | 9.4 | 3.2 |
| Almond (dried) | 18.6 | 54.2 | 598.0 | 10.4 | 9.3 | 230.0 | 310.0 | 4.7 | 4.0 |

As listed in Table 1, the oil content of usual sesame ("Roasted white sesame" in the Table) is approximately 58% by mass. Whereas, as to the processed sesame product in Example 1, the oil content is reduced to 20% by mass and approximately 80% of the original oil content is reduced. Thus, the calorie content is also reduced significantly. Furthermore, because of the reduction in oil content, components such as dietary fibers, calcium, iron, or zinc, which attract attention as healthy foods, relatively increase by a factor of approximately two or more.

### [Example 2 to Example 4 and Comparative Example 1 to Comparative Example 4]

A relation between the oil content and the particle diameter (particle size distribution) of sesame and the flavor or the like of the paste sesame was examined.

Seeds of white sesame were used as a raw material and these seeds were roasted to be roasted sesame. After this roasted sesame was heated to between 120°C to 180°C using a gas heating type flat kettle, the roasted sesame was put in an oil-squeezing apparatus to press and the fat and oil content in the raw material was reduced. The raw material after been pressed was coarsely ground as if loosening and this was transferred to put in a grinder and was ground to fine particles using the grinder. As a grinder, a stone mill type continuous attrition mill pounding sesame between the upper and lower disks was used. The clearance serving as the pounding part in this grinder between the upper and lower disks is as follows in Table 2.

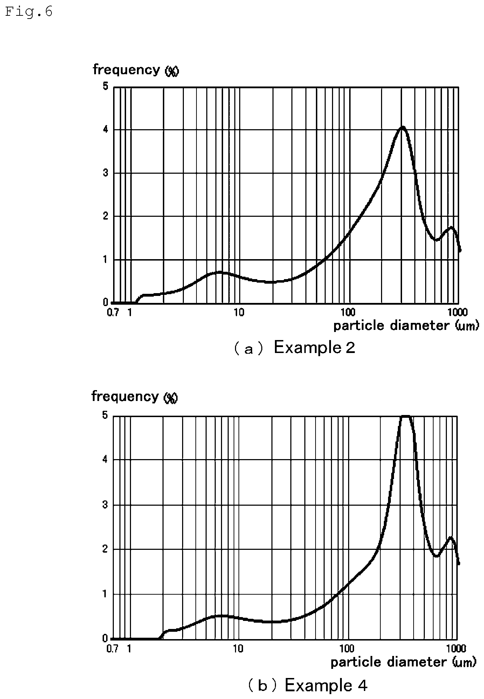

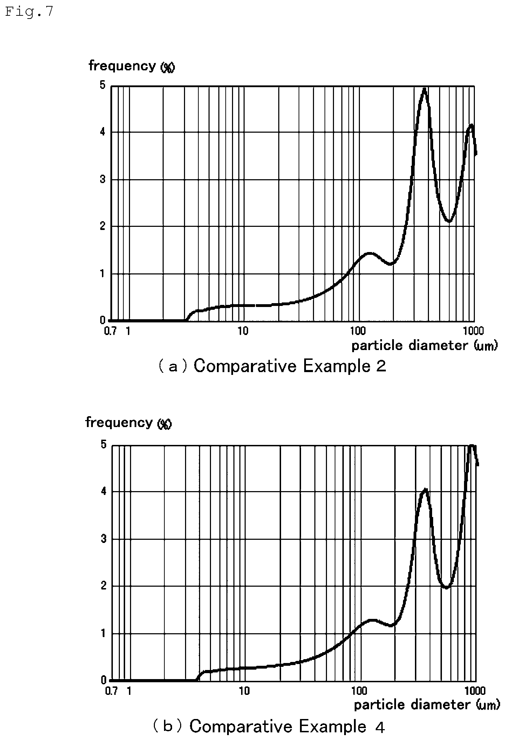

In each of Example 2 to Example 4 and Comparative Example 1 to Comparative Example 4, a heating temperature was adjusted within the range described above, conditions were adjusted for an oil-squeezing apparatus, and four types of products having an oil contents of 20% by mass, 25% by mass, 30% by mass, and 35% by mass were produced. Properties in each case are listed in Table 2. In Table 2, "O" is a case where the product had low adhesion and became powder having fluidity and "X" is a case where the product had adhesion and did not become powder having fluidity in paste form or the like. The grain size distribution in a case where the oil content was 20% by mass was measured in the same way in Example 1. As to the grain size distribution, the 10% cumulative diameter and the 50% cumulative diameter are listed in Table 2. The grain size distribution diagrams of Example 2 and Example 4 are illustrated in Fig. 6, and the grain size distribution diagrams of Comparative Example 2 and Comparative Example 4 are illustrated in Fig. 7.

Each of the processed sesame products in a case where the oil content of the processed sesame products of Example 2 to Example 4 and Comparative Example 1 to Comparative Example 4 was 20% by mass was dissolved in soups in an equal amount individually, the sensory evaluation was carried out via the human tongue to determine if the flavors were close to either paste sesame or roasted sesame. The results are listed in Table 2.

**Table 2**

| | Stone mill Clearance | 10% cumulative diameter (D10) (pm) | 50% cumulative diameter (D50) (µm) | Oil content | | | | Flavor |
|---|---|---|---|---|---|---|---|---|
| | | | | 20% | 25% | 30% | 35% | |
| Example 2 | 0 µm | 9.369 | 210.7 | ○ | × | × | × | Paste sesame |
| Example 3 | 50 µm | 19.06 | 296.3 | ○ | ○ | × | × | |
| Example 4 | 100 µm | 16.59 | 260.0 | ○ | ○ | × | × | |
| Comparative Example 1 | 200 µm | 33.45 | 329.3 | ○ | ○ | ○ | × | Roasted sesame |
| Comparative Example 2 | 300 µm | 45.20 | 378.8 | ○ | ○ | ○ | × | |
| Comparative Example 3 | 400 µm | 46.33 | 399.8 | ○ | ○ | ○ | ○ | |
| Comparative Example 4 | 500 µm | 55.58 | 426.4 | ○ | ○ | ○ | ○ | |

As listed in Table 2, in a case where the accumulation value of a frequency of the particles having 30 µm or smaller in a particle diameter was 10% or larger, that is, in a case where the 10% cumulative diameter was 30 µm or smaller, it was found that the flavor of paste sesame was obtained. It was found that the oil content was required to be smaller than 30% by mass (preferably 25% by mass or smaller) in order to provide powder having low adhesion and fluidity while the flavor of paste sesame is retained.

As illustrated in Fig. 6, the clearance is small in the stone mill type continuous attrition mill and there are parts (peaks) indicating shoulders at positions around 10 µm in Example 2 and Example 4. By contrast, as illustrated in Fig. 7, the clearance is large and a part indicating a shoulder can be hardly confirmed in Comparative Example 2 and Comparative Example 4. Thus, the amount of fine particles at this part significantly affect the flavor of paste sesame. In a case where the amount is large, it is thought that the flavor of paste sesame can be given (also refer to Example 7 described later).

### [Example 5 and Example 6]

A relation between the oil content and the grain size distribution of sesame was examined.

Seeds of white sesame were used as a raw material and these seeds were roasted to be roasted sesame. After this roasted sesame was heated to between 120°C to 180°C using a gas heating type flat kettle, the roasted sesame was put in an oil-squeezing apparatus to press and the fat and oil content in the raw material was reduced. The raw material after been pressed was coarsely ground as if loosening and this was transferred to put in a grinder and was ground to fine particles using the grinder. As a grinder, a stone mill type continuous attrition mill pounding sesame between the upper and lower disks was used.

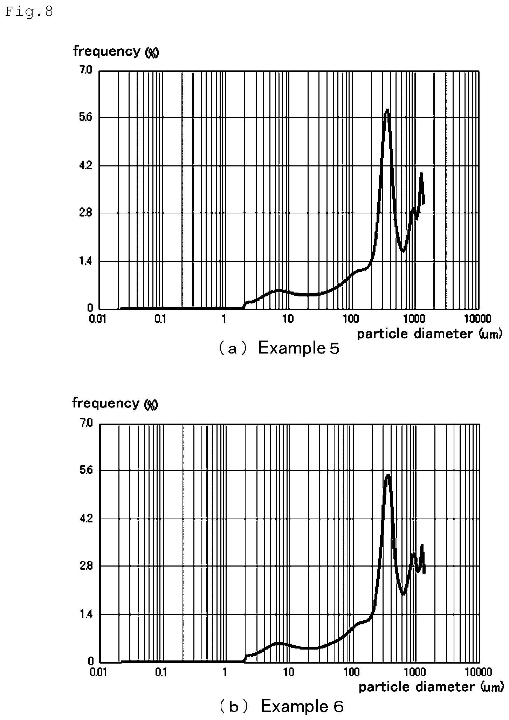

In each of Example 5 to Example 6, a heating temperature was adjusted within the range described above, conditions were adjusted for an oil-squeezing apparatus, and two types of products having an oil content of 20% by mass (Example 5) and 25% by mass (Example 6) were produced. These grain size distributions were measured in the same way in Example 1. As to the grain size distribution, the 10% cumulative diameter and the 50% cumulative diameter are listed in Table 3. Each of grain size distribution diagrams is illustrated in Fig. 8.

**Table 3**

| | Oil content | 10% cumulative diameter (D10) (pm) | 50% cumulative diameter (D50) (µm) |
|---|---|---|---|
| Example 5 | 20% by mass | 17.86 | 338.8 |
| Example 6 | 25% by mass | 17.39 | 342.7 |

As listed in Table 3 and illustrated in Fig. 8, in a case of setting to powdered form in a range of smaller than 30% by mass of the oil content, the same grain size distributions were obtained when the oil content was 20% by mass and 25% by mass.

### [Example 7]

The sensory evaluation in a case where the particle diameter of the processed sesame product is extremely fine was carried out.

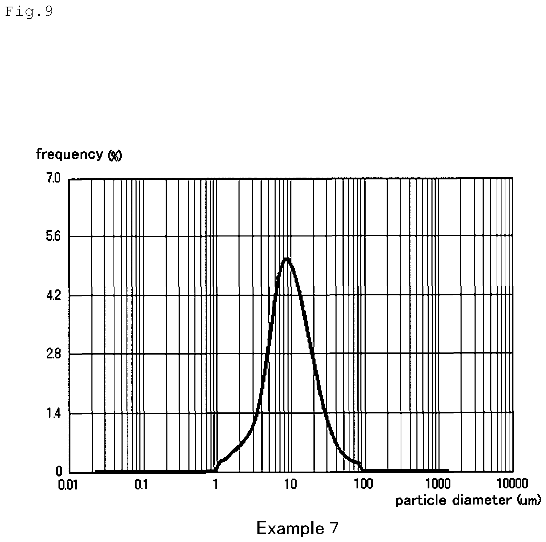

The processed sesame product obtained in Example 1 was dispersed in soup and only fine particles having a slow sedimentation rate were collected (fine particle product). This fine particle product is set to a product in Example 7. The grain size distribution in Example 7 was measured in the same way in Example 1. As to the grain size distribution, the 10% cumulative diameter and the 50% cumulative diameter are listed in Table 4. The corresponding data in Example 1 is also listed together in Table 4, as a comparison. The grain size distribution diagram of Example 7 is illustrated in Fig. 9.

**Table 4**

| | Oil content | 10% cumulative diameter (D10) (pm) | 50% cumulative diameter (D50) (pm) |
|---|---|---|---|
| Example 7 | 20% by mass | 3.679 | 9.319 |
| Example 1 | 20% by mass | 9.516 | 125.9 |

As listed in Table 4 and illustrated in Fig. 9, it was found that only fine particles having around 10 µm in a particle diameter were successfully collected.

The processed sesame product in Example 7 was dissolved in soup to carry out the sensory evaluation via the human tongue in the same way in Example 1. The sensory evaluation evaluated three points: (1) paste sesame feel: clinging to the tongue with rich taste or not, (2) strength of flavor: strength of scent smelling from the back of the nose when putting into the mouth, and (3) strength of taste: strength of taste feeling with the tongue. An evaluation with numerical values was carried out on ten grades, with each evaluation in Example 1 set to "5", to employ an average value of evaluations made by four people. The results of the sensory evaluation are listed in Table 5.

**Table 5**

| | Paste sesame feel | Strength of flavor | Strength of taste |
|---|---|---|---|
| Example 7 | 7.8 | 3.5 | 3.8 |
| Example 1 | 5 | 5 | 5 |

As listed in Table 5, in the sensory evaluation, the result in which the paste sesame feel of the fine particle product of Example 7 is prominently higher, was obtained. This result demonstrates that the presence of particles of about 10 µm significantly affects paste sesame feel. On the other hand, the results regarding the strength of flavor and the strength of taste were slightly weaker than in Example 1, which is a non-classified product, and it was found that the presence of coarse particles was required in order to have both of them together. In order to be an alternative to the existing paste sesame, it can be concluded that a product in which the coarse particles are also present and that has a good balance of the paste sesame feel, the strength of flavor, and the strength of taste is preferable.

### [Example 8 and Example 9]

In the same way of the comparison of Example 7 and Example 1 in Table 4 described above, an effect of the particle diameter of the processed sesame product on the sensory evaluation was examined.

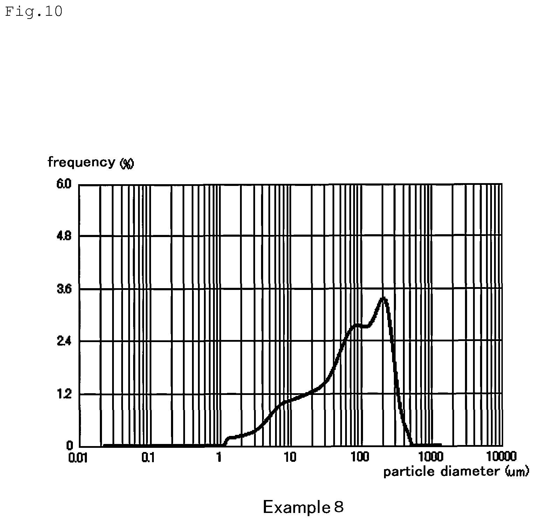

As Example 8, the processed sesame product was produced in the same producing procedure in Example 1. Moreover, in this producing procedure, a processing amount per time in the grinder changed from Example 1. The grain size distribution of the obtained powdered processed sesame product was measured in the same way in Example 1. As to the grain size distribution, the 10% cumulative diameter and the 50% cumulative diameter are listed in Table 6. The grain size distribution diagram in Example 8 is illustrated in Fig. 10.

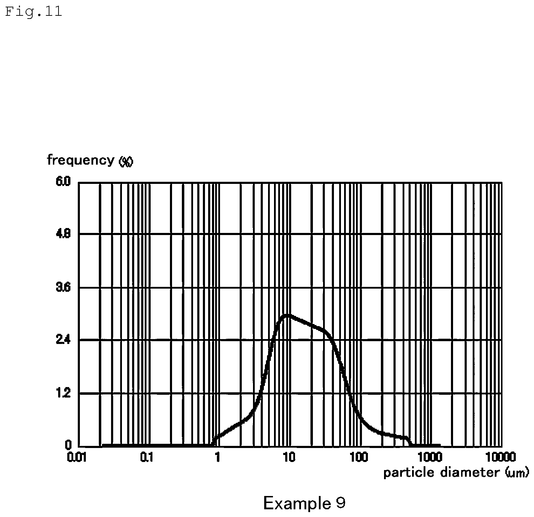

As Example 9, the processed sesame product obtained in Example 8 was dispersed in soup and only fine particles having a slow sedimentation rate were collected (fine particle product). This fine particle product is set to a product in Example 9. The grain size distribution of Example 9 was measured in the same way in Example 1. As to the grain size distribution, the 10% cumulative diameter and the 50% cumulative diameter are listed in Table 6. The grain size distribution diagram of Example 9 is illustrated in Fig. 11.

**Table 6**

| | Oil content | 10% cumulative diameter (D10) (pm) | 50% cumulative diameter (D50) (µm) |
|---|---|---|---|
| Example 9 | 20% by mass | 4.038 | 15.34 |
| Example 8 | 20% by mass | 7.998 | 75.55 |

As listed in Table 6, and illustrated in Fig. 10, and Fig. 11, it was found that D50 was 70 µm or larger in Example 8 and D50 was around 15 µm in Example 9.

The processed sesame products in Examples 8 and 9 were dissolved in soups to carry out the sensory evaluation via the human tongue in the same way in Examples 1 and 7. The items of the sensory evaluation are as same as those in Table 5. An evaluation in Example 9 was carried out on ten grades, with each evaluation in Example 8 set to "5", to employ an average value of evaluations made by five people. The results of the sensory evaluation are listed in Table 7.

**Table 7**

| | Paste sesame feel | Strength of flavor | Strength of taste |
|---|---|---|---|
| Example 9 | 7.4 | 3.8 | 3.8 |
| Example 8 | 5 | 5 | 5 |

As listed in Table 7, the similar tendency to the case in Table 5 was also obtained in Examples 8 and 9. That is, in order to give the paste sesame feel, the presence of fine particles about 10 µm is important and it was found that the presence of coarse particles was required in order to have the paste sesame feel, the strength of flavor, and the strength of taste together. Particularly, it was found that D50 of 70 µm or larger is enough as coarse particles.

### INDUSTRIAL APPLICABILITY

A processed sesame product according to the present invention can be widely used for both professional and household uses by mixing, kneading, or the like with various kinds of foods, since the processed sesame product has a reduced fat and oil content and excellent handleability, while the flavor of paste sesame is retained.

### REFERENCE SIGNS LIST

- 1:: raw material
- 2:: heating and oil-squeezing apparatus
- 3:: coarse grinder
- 4:: grinder
- 5:: product

## Claims

1. A processed sesame product which is powder, comprising a ground product of sesame,
wherein the ground product of sesame has an oil content of smaller than 30% by mass relative to a total mass of the ground product and has a 10% cumulative diameter of 30 µm or smaller, as determined using the method described herein.

2. The processed sesame product according to claim 1, wherein the ground product of sesame has a 50% cumulative diameter of 70 µm or larger.

3. The processed sesame product according to claim 1 or 2, wherein the ground product of sesame has a 10% cumulative diameter of 20 µm or smaller.

4. The processed sesame product according to claim 1, 2 or 3, wherein the ground product of sesame has at least one peak in a range of 20 µm or smaller in particle diameter in a grain size distribution diagram in which a vertical axis indicates existence ratio and a horizontal axis indicates particle diameter, as determined according to the method described herein.

5. A method for producing a processed sesame product which is powder, containing a ground product of sesame, the ground product of sesame having an oil content of smaller than 30% by mass relative to a total mass of the ground product and having a 10% cumulative diameter of 30 µm or smaller,
the method comprising:
an oil-squeezing step of heating and oil-squeezing sesame as a raw material to make an oil content in the raw material smaller than 30% by mass; and
a grinding step of grinding the oil-squeezed raw material to provide a ground product that has a 10% cumulative diameter of 30 µm or smaller, as determined according to the method described herein.

6. The method for producing a processed sesame product according to claim 5, comprising a step of coarsely grinding the oil-squeezed raw material after the oil-squeezing step and before the grinding step.

7. The method for producing a processed sesame product according to claim 5 or 6, wherein the oil-squeezing step is a step of heating and oil-squeezing sesame as the raw material at a temperature between 120°C to 180°C.

8. The method for producing a processed sesame product according to claim 5, 6 or 7, wherein the grinding step is a step of grinding the oil-squeezed raw material to provide a ground product having a 10% cumulative diameter of 30 µm or smaller and a 50% cumulative diameter of 70 µm or larger.

## Patentansprüche

1. Verarbeitetes Sesamprodukt, das ein Pulver ist, das ein gemahlenes Sesamprodukt umfasst,
wobei das gemahlene Sesamprodukt einen Ölgehalt von weniger als 30 Masse-% relativ zu einer Gesamtmasse des gemahlenen Produkts aufweist und einen kumulativen 10 %-Durchmesser von 30 µm oder weniger aufweist, wie unter Verwendung des hierin beschriebenen Verfahrens bestimmt.

2. Verarbeitetes Sesamprodukt nach Anspruch 1, wobei das gemahlene Sesamprodukt einen kumulativen 50 %-Durchmesser von 70 µm oder mehr aufweist.

3. Verarbeitetes Sesamprodukt nach Anspruch 1 oder 2, wobei das gemahlene Sesamprodukt einen kumulativen 10 %-Durchmesser von 20 µm oder weniger aufweist.

4. Verarbeitetes Sesamprodukt nach Anspruch 1, 2 oder 3, wobei das gemahlene Sesamprodukt mindestens einen Peak in einem Bereich von 20 µm oder weniger Teilchendurchmesser in einem Korngrößenverteilungsdiagramm aufweist, in dem eine vertikale Achse das Vorhandenseinsverhältnis und eine horizontale Achse den Teilchendurchmesser angibt, wie gemäß dem hierin beschriebenen Verfahren bestimmt.

5. Verfahren zur Herstellung eines verarbeiteten Sesamprodukts, das ein Pulver ist, das ein gemahlenes Sesamprodukt enthält, wobei das gemahlene Sesamprodukt einen Ölgehalt von weniger als 30 Masse-% relativ zu einer Gesamtmasse des gemahlenen Produkts aufweist und einen kumulativen 10 %-Durchmesser von 30 µm oder weniger aufweist,
wobei das Verfahren Folgendes umfasst:
einen Ölauspressschritt des Erhitzens und Ölauspressens von Sesam als Rohmaterial, um einen Ölgehalt im Rohmaterial kleiner als 30 Masse-% zu erhalten; und
einen Mahlschritt des Mahlens des ölgepressten Rohmaterials, um ein gemahlenes Produkt bereitzustellen, das einen kumulativen 10 %-Durchmesser von 30 µm oder weniger aufweist, wie gemäß dem hierin beschriebenen Verfahren bestimmt.

6. Verfahren zur Herstellung eines verarbeiteten Sesamprodukts nach Anspruch 5, umfassend einen Schritt des groben Mahlens des ölgepressten Rohmaterials nach dem Ölauspressschritt und vor dem Mahlschritt.

7. Verfahren zur Herstellung eines verarbeiteten Sesamprodukts nach Anspruch 5 oder 6, wobei der Ölauspressschritt ein Schritt des Erhitzens und Ölauspressens von Sesam als Rohmaterial bei einer Temperatur zwischen 120 °C bis 180 °C ist.

8. Verfahren zur Herstellung eines verarbeiteten Sesamprodukts nach Anspruch 5, 6 oder 7, wobei der Mahlschritt ein Schritt des Mahlens des ölgepressten Rohmaterials ist, um ein gemahlenes Produkt, das einen kumulativen 10 %-Durchmesser von 30 µm oder weniger und einen kumulativen 50 %-Durchmesser von 70 µm oder mehr aufweist, bereitzustellen.

## Revendications

1. Produit de sésame transformé qui est une poudre, comprenant un composé moulu de sésame,
dans lequel le produit moulu de sésame présente une teneur en huile de moins de 30 % en masse par rapport à une masse total du produit moulu et présente un diamètre cumulatif à 10 % de 30 µm ou moins, comme déterminé en utilisant le procédé décrit ici.

2. Produit de sésame transformé selon la revendication 1, dans lequel le produit moulu de sésame présente un diamètre cumulatif à 50 % de 70 µm ou plus.

3. Produit de sésame transformé selon la revendication 1 ou 2, dans lequel le produit moulu de sésame présente un diamètre cumulatif à 10 % de 20 µm ou moins.

4. Produit de sésame transformé selon la revendication 1, 2 ou 3, dans lequel le produit moulu de sésame présente au moins un pic dans une plage de 20 µm ou moins de diamètre de particule dans un diagramme de distribution de taille de grain, dans lequel un axe vertical indique le rapport d'existence et un axe horizontal indique le diamètre de particule, comme déterminé selon le procédé décrit ici.

5. Procédé de production d'un produit de sésame transformé qui est une poudre, contenant un produit moulu de sésame, le produit moulu de sésame présentant une teneur en huile de moins de 30 % en masse par rapport à une masse totale du produit moulu et présentant un diamètre cumulatif à 10 % de 30 µm ou moins,
le procédé comprenant :
une étape d'extraction d'huile par pressage consistant à chauffer et à extraire l'huile par pressage de sésame en tant que matériau brut pour obtenir une teneur en huile dans le matériau brut de moins de 30 % en masse ; et
une étape de broyage consistant à broyer le matériau brut qui a été soumis à une extraction d'huile par pressage pour fournir un produit moulu qui présente un diamètre cumulatif à 10 % de 30 µm ou moins, comme déterminé selon le procédé décrit ici.

6. Procédé de production d'un produit de sésame transformé selon la revendication 5, comprenant une étape de broyage grossier du matériau brut qui a été soumis à une extraction d'huile par pressage après l'étape d'extraction d'huile par pressage et avant l'étape de broyage.

7. Procédé de production d'un produit de sésame transformé selon la revendication 5 ou 6, dans lequel l'étape d'extraction d'huile par pressage est une étape de chauffage et d'extraction d'huile par pressage de sésame en tant que matériau brut à une température entre 120 °C et 180 °C.

8. Procédé de production d'un produit de sésame transformé selon la revendication 5, 6 ou 7, dans lequel l'étape de broyage est une étape de broyage du matériau brut qui a été soumis à une extraction d'huile par pressage pour fournir un produit moulu qui présente un diamètre cumulatif à 10 % de 30 µm ou moins et un diamètre cumulatif à 50 % de 70 µm ou plus.
